# EUROPÄISCHE PATENTANMELDUNG

(11) **EP 4 570 929 A1**
(43) Veröffentlichungstag der Anmeldung: **18.06.2025**
(21) Anmeldenummer: 23216812.0
(22) Anmeldetag: 14.12.2023
(51) Int. Cl.: C22B 1/06, C01D 15/00, C04B 11/00, C04B 14/00, C04B 18/00, C22B 1/00, C22B 1/02, C22B 3/00, C22B 26/12

(54) **VERFAHREN ZUR HERSTELLUNG EINES GIPSROHSTOFFS**

(71) Anmelder: ITEL Deutsches Lithiuminstitut GmbH, 06108 Halle (Saale) (DE); Rocktech Lithium Consulting GmbH, 40882 Ratingen (DE); Knauf Gips KG, 97346 Iphofen (DE); Papenburg Entsorgung Ost GmbH, 06112 Halle (Saale) (DE)
(72) Erfinder: SCHMITT, Harald, 97332 Volkach (DE); RODEHUTSKORS, Philipp, 91058 Erlangen (DE); ADORNI, Martin, 45468 Mülheim an der Ruhr (DE); NEUMANN, Andreas, 91338 Igensdorf (DE); HEILMANN, Andreas, 04288 Leipzig (DE); WOSKOWSKI, Julia, 06110 Halle Saale) (DE); WEHRSPOHN, Ralf B., 25849 Pellworm (DE)
(74) Vertreter: dompatent von Kreisler Selting Werner - Partnerschaft von Patent- und Rechtsanwälten mbB

(57) **Zusammenfassung**

Verfahren zur Herstellung eines Gipsrohstoffs umfassend die Schritte:
a) Bereitstellen eines Lithiumerzes
b) Umsetzen des Lithiumerzes mit konzentrierter Schwefelsäure bei Temperaturen zwischen 200 und 330 °C
c) Zugabe von Wasser, um eine Suspension zu erhalten
d) Trennen der Suspension in eine Festphase und eine Flüssigphase
e) Zugabe eines Calciumsalzes zur Flüssigphase
f) Abtrennen des Niederschlags.

## Beschreibung

Die vorliegende Erfindung betrifft ein Verfahren zur Herstellung eines Gipsrohstoffs, den Gipsrohstoff und seine Verwendung.

Lithium ist ein wichtiger Rohstoff, insbesondere im Bereich von Batterien. Jährlich werden aktuell ca. 80.000 Tonnen produziert.

Wirtschaftlich verwertbare Vorkommen umfassen sowohl Pegmatite als auch Salzseen.

In Pegmatiten kommt Lithium kommt typischerweise vergesellschaftet mit Silikaten vor, beispielsweise als Spodumen, Petalit, Zinnwaldit, Lepidolith usw.

Es sind eine Vielzahl von Aufarbeitungsverfahren bekannt. Typische Schritte umfassen das
- Brechen und Mahlen des Erzes,
- Ggf. eine Hitzebehandlung, um Alpha-Spodumen in offenporigen Beta-Spodumen umzuwandeln,
- eine Auslaugung mit konzentrierter Schwefelsäure, um einen Ionenaustausch im Erz zu erreichen, wobei das Lithium im Erz gegen Wasserstoffionen ausgetauscht und die Lithiumionen in die konzentrierte Schwefelsäure übergehen
- Neutralisation mit Calciumhydroxyd oder Calciumcarbonat
- Filtration, um die lithiumhaltige Lösung abzutrennen
- Aufreinigung der Lithiumlösung.

Aus den Lithiumlösungen können Lithiumsalze durch verschiedene weitere Fällung mit Calciumhydroxiden, Natriumcarbonaten, Natriumhydroxiden, Bariumhydroxiden etc. erhalten werden. Typische Endprodukte sind dann Lithiumcarbonat und Lithiumhydroxide, die so das übliche Handelsprodukt von Lithium sind.

Der Niederschlag, der durch die Filtration nach der Neutralisation erhalten wird, wird auch als "Lithium Slag" ("LS") bezeichnet. Bei der Herstellung von einer Tonne Lithiumcarbonat fallen 8 bis 10 Tonnen LS an, bei einer Tonne Lithiumhydroxid sogar 20 bis 40 Tonnen LS. LS wird in vielen Fällen deponiert. Es ist auch versucht worden, LS zur Wiederauffüllung von Lagerstätten nach dem Abbau zu verwenden, als so genannter Versatz.

Yan He et al. beschreiben im Journal of Environmental Management 248 (2019) 109282 beispielsweise wie Lithium Slag mit Flugasche und Portland-Zement vermischt wird, um im Bergwerk verfüllt zu werden.

Lithium Slag hat auf die Eigenschaften des Zementes eher negative Einflüsse wie Mengyi Zhai et al. im Journal of Building Engineering 39 (2021) 102287 zeigen, weil es die Festigkeit des Betons verringert.

Aus der Fällung mit Calciumsalzen enthält Lithium Slag auch hohe Mengen an Gips, allerdings konnte LS aufgrund der Beimengung weiterer Inhaltsstoffe auch nicht als Gipsquelle sinnvoll verwertet werden.

Aufgabe der vorliegenden Erfindung war es, die weiteren Inhaltsstoffe des Lithiumerzes einer sinnvollen Verwertung zuzuführen.

Gelöst wird die Aufgabe durch ein Verfahren zur Herstellung eines Gipsrohstoffs umfassend die Schritte:
a) Bereitstellen eines Lithiumerzes
b) Umsetzen des Lithiumerzes mit konzentrierter Schwefelsäure bei Temperaturen zwischen 200 und 330 °C
c) Zugabe von Wasser, um eine Suspension zu erhalten
d) Trennen der Suspension in eine Festphase und eine Flüssigphase
e) Zugabe eines Calciumsalzes zur Flüssigphase
f) Abtrennen des Niederschlags.

Erfindungsgemäß wird ein Lithiumerz bereitgestellt. Lithiumerze sind häufig Mischungen verschiedenster Mineralien. Geeignet sind insbesondere pegmatitische Lithium-Minerale und solche, die sich von pegmatitschen Lithium-Mineralen ableiten, beispielsweise hydrothermale und/oder metamorphe Lithium-Mineralien. Typische enthaltene Mineralien sind Spodumen (Pyroxen - Pegmatite LiAlSi₂O₆), Petalit (Pegmatit LiAlSi₄O₁₀), Amblygonit, Kryolithionit, Triphylin, Zinnwaldit (hydrothermaler Glimmer: KLiFeAl(AlSi₃)O₁₀(F,OH)₂), Lepidolith (metamorpher Glimmer: K(Li_{0,75}Al_{0,25})₃[(F_{0,75}(OH)_{0,25})₂(Al_{0,75}Si_{0,25})Si₃O₁₀]) oder Mischungen davon. Das Lithiumerz kann bereits einer Vorbehandlung unterzogen worden sein und beispielsweise ein Erzkonzentrat sein.

Das Lithiumerz wird mit konzentrierter Schwefelsäure bei Temperaturen zwischen 200 und 330 °C versetzt, wodurch eine Mischung erhalten wird. Üblicherweise wird bei der Behandlung des Lithiumerzes mit Schwefelsäure mehr Schwefelsäure eingesetzt, als stöchiometrisch erforderlich wäre, um eine möglichst vollständige Freisetzung des Lithiums im Lithiumerz zu erreichen. Häufig hat das mit Schwefelsäure versetzte Erz eine pastöse bis feste Konsistenz.

Im nächsten Schritt erfolgt die Zugabe von Wasser. Die Mischung von Erz, Schwefelsäure und Wasser wird typischerweise eine Zeitlang gerührt, wodurch eine Suspension erhalten wird. Die Wasserzugabe erfolgt typischerweise so, dass die Lösung pumpbar wird.

Wie im Stand der Technik erfolgt durch die Zugabe von Schwefelsäure und anschließend Wasser ein Austausch der Lithiumionen gegen Protonen im Mineral, dieser Schritt wird auch als (Aus-)Laugung bezeichnet.

Dann erfolgt die Abtrennung des Feststoffes aus der Suspension. Dieser Feststoff enthält chemisch zu einem großen Anteil Aluminiumoxide und Silikate. Die flüssige Phase enthält die Lithiumionen als Lithiumsulfat und kann weiter aufgereinigt werden.

Nun erfolgt die Zugabe eines Calciumsalzes zu der flüssigen Phase. Dabei fällt Calciumsulfat als Niederschlag aus, das im nächsten Schritt abgetrennt wird. Da in Schritt d) bereits eine Abtrennung einer Festphase erfolgt ist, enthält der Calciumsulfatniederschlag nur eine geringe Menge an Aluminium und insbesondere eine geringe Menge an Silikat.

Als Calciumsalz eignen sich insbesondere Calciumsalze ausgewählt aus Calciumcarbonat, Calciumhydroxid, Calciumnitrat oder Mischungen davon.

In Abhängig vom eingesetzten Calciumsalz kann die Lösung hierdurch neutralisiert werden, d.h. vom stark sauren in einen höheren pH-Bereich gebracht werden. Typisch sind pH-Werte von 5.5 bis 7, bevorzugt 5.8 bis 6.5.

Die Neutralisation in den Bereich 5.8 bis 6.5 ist besonders bevorzugt.

In einigen Ausführungsformen der Erfindung muss das Lithiumerz noch vorbereitet werden. Hierzu gehören insbesondere eine Zerkleinerung und/oder eine Temperaturbehandlung, typischerweise oberhalb von 1000 °C. Insoweit unterscheidet sich die Erzaufbereitung nicht von anderen Verfahren. Das Aufheizen kann mit beliebigen Energiequellen erfolgen; dieser Schritt wird auch als Rösten bezeichnet. Als Energiequelle eignen sich Erdgas, Flüssiggas, Wasserstoff, Ammoniak, Sekundärbrennstoffe und alle weiteren bekannten Energiequellen.

Die Restewärme des gerösteten Erzes kann auch genutzt werden, um die Schwefelsäure auf die notwendige Temperatur zu erhitzen. Das kann durch direkten Kontakt mit dem heißen gerösteten Erz erfolgen oder indirekt, durch die Rückgewinnung der Wärme beispielsweise über Wärmetauscher, Quenching oder andere geeignete Geräte und ggf. unter Zuhilfenahme von Wärmepumpen.

Die Konzentration der Schwefelsäure liegt bevorzugt im Bereich >12 Mol/l, bevorzugt >15 Mol/l (gemessen bei 25 °C). Durch die Erhitzung auf 200 und 330 °C ändert sich das Volumen, was die Säurekonzentration verändert. Typisch ist die Verwendung von konzentrierter Schwefelsäure mit einer Konzentration von etwa 96%-98%.

Erfindungsgemäß wird vor dem Schritt d) noch nicht neutralisiert und insbesondere nicht mit Calciumsalzen, wie Calciumcarbonaten oder Calciumhydroxid neutralisiert. Neutralisiert bedeutet in diesem Zusammenhang insbesondere, dass der pH-Wert nicht in den Bereich > pH 5 gebracht wird. Bevorzugt bleibt der pH-Wert <2 oder <1.

Zur Abtrennung von Fest- und Flüssigphasen eignet sich beispielsweise eine Filtration. Grundsätzlich können alle Verfahren angewandt werden, die auch in einem klassischen Verfahren nach der Neutralisation mit Calciumhydroxid oder Calciumcarbonat eingesetzt werden.

Der erfindungsgemäße erhaltende Niederschlag kann als Rohstoff zum Beispiel für die Baustoffindustrie und dort insbesondere in der Gipsindustrie, in der Zementindustrie zur Klinkerherstellung verwendet werden.

Durch Kalzinieren des Gipsrohstoffs lässt sich dieser in eine reaktivere Form überführen, beispielsweise als Calciumsulfat-Halbhydrat oder Anhydrit.

Gegenstand der Erfindung ist auch ein Gipsrohstoff erhältlich durch das erfindungsgemäße Verfahren. Typische Zusammensetzungen sind Gehalte im getrockneten Niederschlag an
- Calcium, berechnet als CaO > 23 MA-%, bevorzugt > 31 MA-%
- Schwefel, berechnet als SO₃ > 23 MA-%, bevorzugt > 35 MA-%
- Aluminium, berechnet als Al₂O₃ < 9 MA-%
- Eisen, berechnet als FezOs < 4 MA-%
- Lithium, gemessen als Lithium > 0,001 MA-%, bevorzugt > 0,01 MA-%.

Die Bestimmung der Zusammensetzung erfolgt mittels der Methoden im experimentellen Teil.

Gegenstand der Erfindung ist auch ein Gipsbaustoff, der den erfindungsgemäßen Gipsrohstoff enthält, beispielsweise in Form eines Wandputzes oder einer Gipsplatte.

Gegenstand der Erfindung ist auch die Verwendung des Gipsrohstoffs als Bestandteil einer Gipsbaustoff, insbesondere einer Gipsmischung, beispielsweise mit einem natürlichen Gips oder einem Gips aus der Wiederverwendung von Gipsreststoffen.

Alle Messungen, soweit nicht anders angegeben erfolgen bei 25 °C.

Die Erfindung wird durch die nachfolgenden Beispiele näher erläutert:

### Messmethoden

### Analysenmethoden:

Die chemischen Analysen wurden mittels RFA (Röntgenfluoreszenzanalyse) durchgeführt (S8 TIGER von Bruker). Dazu wurde zunächst der Glühverlust bestimmt.

Lithium wurde mittels ICP-MS (Inductively Coupled Plasma - Mass Spectrometry) gemessen.

Gips wurde aus einer DSC/TG-Analyse (Differential-Scanning-Kalorimetrie/Thermogravimetrische Analyse) mit IR/MS-Kopplung (Isotoperatio mass spectrometry) bestimmt. Bei dieser Methode wird die Probe stark erhitzt und ihr thermisches Verhalten untersucht. Dies ermöglicht, zu beobachten, was während eines Glühverlustes genau passiert. Aufgrund des Freisetzens von Gasen und der Massenänderung kann man in diesem Fall zurückverfolgen, wie viel Gips und Kalzit in der Probe vorhanden sind.

### Beispiel 1: Erz aus einer ersten Mine

Das Erz wurde mit dem erfindungsgemäßen Prozess verarbeitet; die Gipsfraktion wurde abgetrennt und analysiert. Da der Niederschlag offensichtlich heterogen war, insbesondere unterschiedlich feucht, wurden Proben von zwei Stellen des Niederschlags analysiert. Die Ergebnisse sind in Tabelle 1 zusammengefasst.

### Beispiel 2: Erz aus einer zweiten Mine

Das Erz wurde mit dem erfindungsgemäßen Prozess verarbeitet; die Gipsfraktion wurde abgetrennt analysiert. Die Ergebnisse sind in Tabelle 1 zusammengefasst.

### Beispiel 3: Erz aus einer dritten Mine

Das Erz wurde mit dem erfindungsgemäßen Prozess verarbeitet; die Gipsfraktion wurde abgetrennt analysiert. Da der Niederschlag offensichtlich heterogen war, insbesondere unterschiedlich feucht, wurden Proben von zwei Stellen des Niederschlags analysiert. Die Ergebnisse sind in Tabelle 1 zusammengefasst.

### Beispiel 4: Erz aus einer vierten Mine

Das Erz wurde mit dem erfindungsgemäßen Prozess verarbeitet; die Gipsfraktion wurde abgetrennt analysiert. Da der Niederschlag offensichtlich heterogen war, insbesondere unterschiedlich feucht, wurden Proben von zwei Stellen des Niederschlags analysiert. Die Ergebnisse sind in Tabelle 1 zusammengefasst (alle Werte als MA-%).

| | **Beispiel 1** | | **Beispiel 2** | **Beispiel 3** | | **Beispiel 4** | |
|---|---|---|---|---|---|---|---|
| | Probe A | Probe B | | Probe A | Probe B | Probe A | Probe B |
| CaO [%] | 37,80 | 32,59 | 31,50 | 35,00 | 28,50 | 32,00 | 24,34 |
| SO₃ [%] | 23,80 | 23,94 | 33,90 | 41,20 | 36,53 | 41,80 | 35,93 |
| Al₂O₃ [%] | 7,13 | 7,35 | 7,71 | 6,47 | 5,15 | 8,19 | 8,49 |
| Fe₂O₃ [%] | 1,84 | 1,71 | 2,41 | 2,38 | 1,69 | 3,70 | 2,51 |
| SiO₂ [%] | 1,03 | 0,92 | 2,37 | 0,81 | 1,02 | 0,65 | 0,79 |
| P₂O₅ [%] | 1,00 | 1,14 | 0,26 | 1,36 | 1,13 | 0,70 | 0,73 |
| Li [%] | 0,35 | 0,11 | 0,86 | 0,15 | 0,0684 | 0,59 | 0,29 |
| Glühverlust [%] | 26,85 | 31,55 | 19,52 | 12,34 | 25,35 | 11,87 | 25,23 |
| Gips [%] | ca. 53 | | ca. 57 | ca. 84 | | ca. 82 | |
| Calcit [%] | ca. 41 | | ca. 24 | ca. 8 | | ca. 5 | |

## Patentansprüche

1. Verfahren zur Herstellung eines Gipsrohstoffs umfassend die Schritte:
a) Bereitstellen eines Lithiumerzes
b) Umsetzen des Lithiumerzes mit konzentrierter Schwefelsäure bei Temperaturen zwischen 200 und 330 °C
c) Zugabe von Wasser, um eine Suspension zu erhalten
d) Trennen der Suspension in eine Festphase und eine Flüssigphase
e) Zugabe eines Calciumsalzes zur Flüssigphase
f) Abtrennen des Niederschlags.

2. Verfahren nach Anspruch 1, wobei das Lithiumerz Spodumen, Petalit, Zinnwaldit, Lepidolith oder Mischungen davon umfasst.

3. Verfahren nach Anspruch 1 oder 2, wobei das Lithiumerz einer Temperaturbehandlung oberhalb von 1000 °C unterzogen wurde.

4. Verfahren nach einem der Ansprüche 1 bis 3, wobei das Lithiumerz vor der Temperaturbehandlung einer Zerkleinerung unterzogen wurde.

5. Verfahren nach einem der Ansprüche 1 bis 4, wobei die konzentrierte Schwefelsäure eine Konzentration von > 12 mol/l bei 25 °C aufweist.

6. Verfahren nach einem der Ansprüche 1 bis 5, wobei vor Schritt d) nicht neutralisiert wurde, insbesondere nicht mit Calciumsalzen.

7. Verfahren nach einem der Ansprüche 1 bis 6, wobei das Trennen durch Filtration erfolgt.

8. Verfahren nach einem der Ansprüche 1 bis 7, wobei das Calciumsalz ausgewählt wird aus Calciumcarbonat, Calciumhydroxid, Calciumnitrat oder Mischungen davon.

9. Verfahren nach einem der Ansprüche 1 bis 8, wobei die Zugabe des Calciumsalzes zur Flüssigphase erfolgt, bis der pH bei 5.5 bis 7, bevorzugt 5.8 bis 6.5 liegt.

10. Verfahren nach einem der Ansprüche 1 bis 9, umfassend weiter den Schritt
g) Verwendung des Niederschlags als Rohstoff für die Baustoffindustrie, insbesondere Gipsindustrie, Zementindustrie, Klinkerherstellung.

11. Verfahren nach einem der Ansprüche 1 bis 10, umfassend das Kalzinieren des Gipsrohstoffs.

12. Gipsrohstoff, erhältlich durch das Verfahren gemäß einem der Ansprüche 1 bis 11.

13. Gipsrohstoff nach Anspruch 12, mit Gehalten an:
Calcium, berechnet als CaO > 23 MA.-%
Schwefel, berechnet als SO₃ > 23 MA.-%
Aluminium, berechnet als Al₂O₃ < 9 MA-%
Eisen, berechnet als FezOs < 4 MA-%
Lithium, gemessen als Lithium > 0,001 MA-%.

14. Gipsbaustoff, enthaltend den Gipsrohstoff nach Anspruch 12 oder Anspruch 13.

15. Verwendung des Gipsrohstoffs nach Anspruch 12 oder 13 als Bestandteil eines Gipsbaustoff, insbesondere einer Gipsmischung.
